Europäisches Patentamt

European Patent Office

Office européen des brevets

(11) Numéro de publication: **0 073 858**
**B1**

(12) **FASCICULE DE BREVET EUROPEEN**

(45) Date de publication du fascicule du brevet: **18.12.85**

(21) Numéro de dépôt: **81200986.8**

(22) Date de dépôt: **04.09.81**

(51) Int. Cl.⁴: **G 01 K 17/06, G 01 W 1/17, G 01 P 5/12**

(54) **Sonde de mesure extérieure et installation de commande de chauffage utilisant cette sonde.**

(43) Date de publication de la demande:
**16.03.83 Bulletin 83/11**

(45) Mention de la délivrance du brevet:
**18.12.85 Bulletin 85/51**

(84) Etats contractants désignés:
**AT BE CH DE FR LI**

(56) Documents cités:
**BE-A- 832 295**
**DE-B-1 184 117**
**FR-A-1 171 214**
**US-A-2 612 047**
**US-A-2 800 018**

(73) Titulaire: **ATELIERS DE CONSTRUCTIONS ELECTRIQUES DE CHARLEROI (ACEC) Société Anonyme**
**Avenue Lloyd George 7**
**B-1050 Bruxelles (BE)**

(72) Inventeur: **Mouillard, Jean**
**Rue du Moulin, 4**
**B-7960 Ladeuze (BE)**

(74) Mandataire: **Bossard, Franz et al**
**ACEC - Service des Brevets Boîte Postale 4**
**B-6000 Charleroi (BE)**

Courier Press, Leamington Spa, England.

# Description

L'invention concerne und sonde de mesure telle que définie dans la préambule de la revendication 1. Elle concerne aussi une installation de commande de chauffage utilisant une telle sonde.

Des installations de commande de chauffage utilisant des sondes de mesure extérieures sont bien connues. Une telle installation est décrite par exemple dans le brevet belge BE—A—832 295 et comprend une sonde de mesure de la température extérieure, une ou plusieurs sondes de mesure de la température d'un ou plusieurs locaux à chauffer et un dispositif de commande de limitation de la puissance maximale de chauffage en fonction de la température extérieure et l'ensemble des circuits de commande de chauffage électrique proprement dit. Toutefois, l'invention n'est pas limitée au chauffage électrique, mais peut être appliquée à n'importe quel chauffage dans lequel la puissance de chauffage peut être réglée. En particulier, dans un chauffage central à eau chaude, la puissance de chauffage est limitée par la température de l'eau réglée par un thermostat commandé automatiquement par un tel dispositif de commande de limitation de la puissance maximale de chauffage.

La sonde de mesure extérieure dans le brevet ci-dessus est une sonde mesurant la température extérieure. Il existe d'autres sondes de mesure extérieures dites à effet anémométrique qui permettent de mesurer une température extérieure corrigée pour tenir compte d'un effet de refroidissement par le vent. Ces sondes de mesure extérieures comprennent en général une résistance variable avec la température. Dans le cas d'une sonde de mesure de la température extérieure, le courant de mesure est suffisamment faible pour ne pas provoquer de chauffage de la résistance variable avec la température. Dans le cas d'une sonde anémométrique, au contraire, le courant de mesure peut être plus important de manière à provoquer un léger chauffage de la résistance. Il est notamment connu de la demande de brevet allemand DE—B—1184117 d'utiliser une sonde de mesure disposée en plein air, ladite sonde comprenant une enceinte perméable à l'air et renfermant un élément sensible à la température et une résistance chauffante disposées dans un canal parcouru par l'air extérieur.

Une telle conception connue de la sonde ne permet pas d'imiter ou simuler les conditions de refroidissement d'une maison bien isolée dans laquelle les portes et fenêtres ferment bien. C'est pour cette raison qu'au moyen de ces sondes connues, il n'est pas possible d'obtenir des commandes de chauffage qui permettent de limiter à un minimum la puissance de chauffage maximum disponible.

Ce défaut d'admettre une puissance trop grande se manifeste surtout dans le cas où un des locataires de l'immeuble chauffé ouvre toutes grandes ses fenêtres, car à ce moment la commande de chauffage admet la puissance maximum disponible en fonction de la mesure faite par la sonde de mesure extérieure. Si cette sonde mesure seulement la température extérieure, il est évident que la puissance admissible doit tenir compte des nécessités de chauffage en cas de vent fort. En comme l'ouverture de fenêtres se fait en général lorsqu'il n'y a pas de vent, les pertes inutiles de calories sont grandes. Il est possible d'améliorer cette défaillance en utilisant une sonde anémométrique, telle que la sonde suivant la demande de brevet allemand DE—B—1184117 déjà mentionée, mais une telle sonde ne pourrait être utilisée efficacement qui pour simuler les conditions de refroidissement d'une maison bien isolée en présence de vents faibles jusqu'à environ 5 m/sec, alors qu'il faudrait tenir compte de vents d'au moins 15 m/sec.

L'invention a pour but une sonde permettant de mesurer non seulement la température extérieure, mais aussi de mesurer la vitesse du vent et de tenir compte de son influence sur les besoins de chauffage d'une maison bien isolée et ce pour des vitesses faibles jusqu'aux vitesse en cas de tempête. Un autre but de l'invention est une installation de commande de chauffage permettant de limiter à un minimum la puissance de chauffage maximum disponible en tenant compte de la température extérieure et de la vitesse du vent.

Selon l'invention le premier de ces buts est atteint en utilisant une sonde de mesure telle que défine dans la revendication 1.

Une telle sonde ressemble ainsi à une maison en miniature. En effet, une maison renferme aussi un espace d'air et un chauffage et elle est perméable à l'air notamment à l'endroit des fentes le long des bords des fenêtres et portes.

L'autre desdits buts est atteint par l'intermédiaire d'une installation de commande de chauffage ayant les caractéristiques évoquées dans la revendication 3.

L'invention est expliquée ci-dessous par rapport à un exemple d'une forme d'exécution en se référant au dessin annexé.

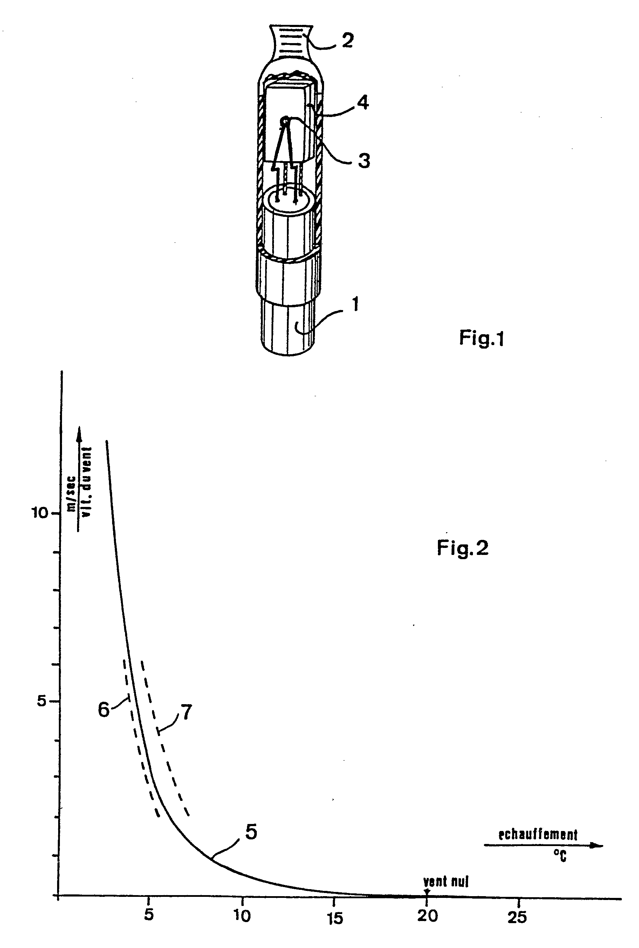

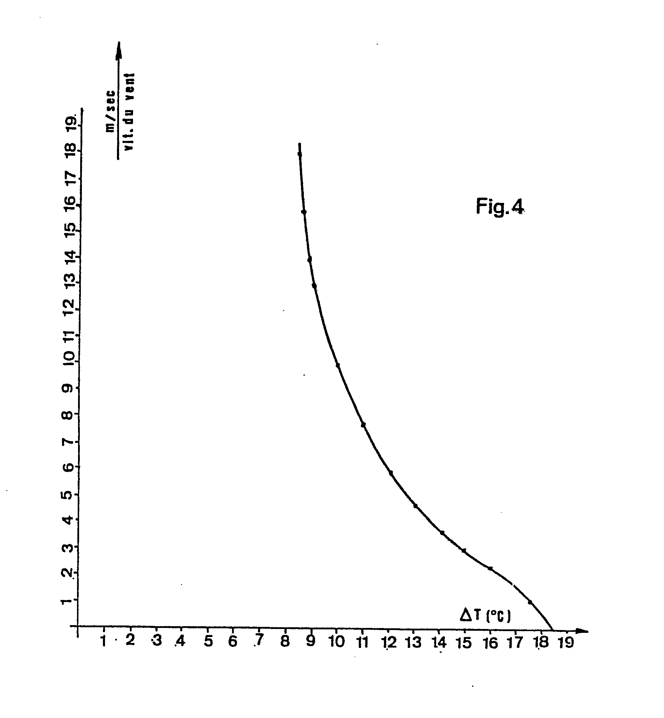

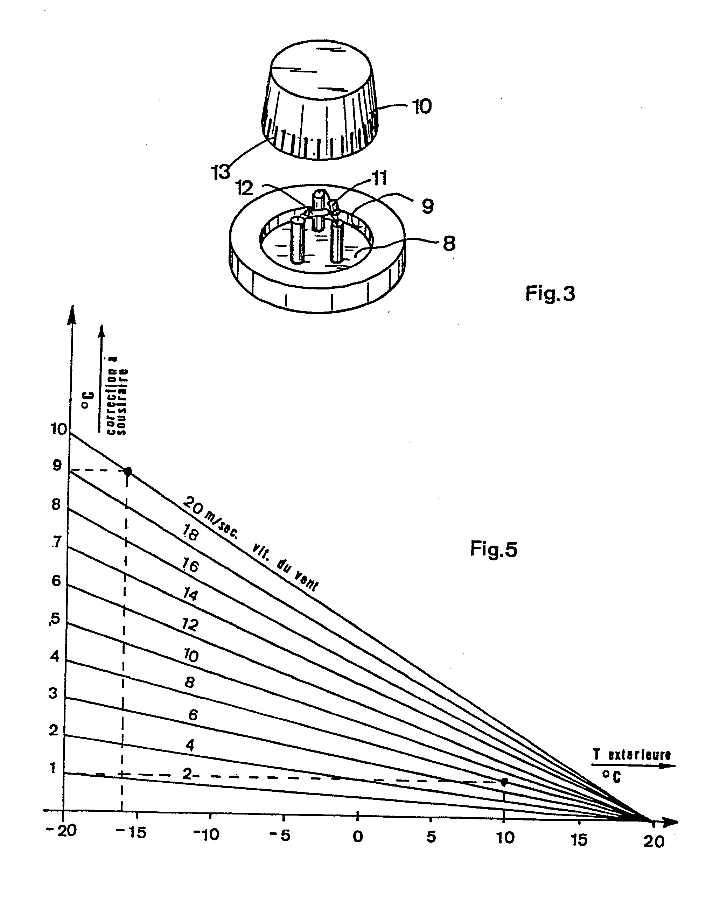

La figure 1 représente une sonde anémométrique connue et la figure 2 la caractéristique de cette sonde en fonction de la vitesse du vent. La figure 3 représente, en perspective une sonde suivant l'invention et la figure 4 la caractéristique de cette sonde. La figure 5 représente un nomogramme d'une fonction de transformation de données de mesure en données de commande.

Un anémomètre bien connu et de forme simple est représenté à la figure 1. Un câble téléphonique à 4 conducteurs 1 supporte à son extrémité une sonde de mesure de la température enfermée dans une gaine thermorétractible 2. La sonde est composée d'une résistance 3 d'environ 150 Ω et d'un élément à résistance variable en fonction de la température 4. La sonde est alimentée par exemple par une source de 5 volts. La caractéristique échauffement-vitesse du vent se présente approximativement sous forme d'une courbe hyperbolique 5 telle que montrée à la figure 2. L'examen de la courbe de la figure 2 révèle immédiatement les inconvénients de cette sonde connue; une sensibilité extrème aux vitesses de vent faibles, une sensibilité presqu'inexistente aux vents fort's.

Deux sections de courbe 6 et 7 montrent le domaine de variations entre deux conditions limites: vent de côté, courbe 6 et vent de face, courbe 7. A cause de cette variation, il n'est plus possible de mesurer, de manière fiable, l'effet de refroidissement de vents soufflant à des vitesses supérieures à 5 m/sec.

La figure 3 représente, en perspective, une sonde suivant l'invention, capot soulevé pour montrer l'intérieur. La sonde est constituée par une base 8 présentant un bord cylindrique 9 dans lequel peut être embroché le bord libre du capot 10. La base 8 et le capot 10 forment ensemble une enceinte d'un espace d'air dans lequel sont logés un élément sensible à la température, par exemple une résistance 11 variable en fonction de la température et une résistance chauffante 12. L'enceinte formée par la base 8 et le capot 10 est permèable à l'air à l'endroit de plusieurs ouvertures réparties sur sa surface. Dans l'exemple représenté à la figure 3, ces ouvertures sont de très fines fentes le long des génératrices du tronc de cône formant la capot 10. En l'occurrence il s'agit de plusieurs dizaines de fentes 13 d'une largeur de l'ordre d'un ou de plusieurs dixièmes de millimètre et d'une longueur de quelques miliètres réparties de manière équidistante sur la pourtour du bord libre du capot 10. Il est évidemment possible de réaliser cette perméabilité à l'air par d'autres moyens, par exemple en pratiquant des trous plus grands, soit dans la base 8, soit dans le capot 10, ou à la fois dans la base 8 et le capot 10 et en obturant ces trous par exemple par une mousse à pores ouverts ou par des tissus ou feutres, de préférence imputrécibles. Il est aussi possible de fabriquer soit la base, soit le capot en matériaux frittés à pores ouverts comme on les utilise pour des filtres destinés au filtrage de précipités chimiques sous vide ou sous haute pression.

La solution montrée à la figure 3 est cependant particulièrement avantageuse à cause de la reproductibilité du taux de perméabilité au moyen de techniques de moulage de haute précision des fentres 13 développées pour la fabrication de certains filtres en matière plastique.

La figure 4 monte un exemple d'une carac-téristiqué de réponse d'une sonde selon la figure 3, utilisable pour des vitesses de vent entre 0 et 20 m/sec. La différence de température entre la température mesurée lorsque la résistance chauffante 12 est mise sous tension par rapport à la température extérieure mesurée en l'absence d'une influence de la résistance chauffante 12 permet de déduire la vitesse du vent. La transformation chauffante 12 permet de déduire la vitesse du vent. La transformation de ces différences de température en valeurs de vitesse du vent peut être réalisée de diverses manières, notamment au moyen d'un micro-ordinateur ou au moyen de dispositifs de calcul analogiques, hybrides etc.

La sonde montée à la figure 3 peut servir aussi à la mesure de la température extérieure, en l'absence de l'influence du vent, pendant les périodes où la résistance 12 n'est pas mise sous tension. Il suffit alors de mesurer, sans provoquer d'échauffement, la résistance de l'élément sensible à la température. Cette valeur de temptérature non corrigée est nécessaire dans l'installation de commande pour déterminer par exemple l'instant de mise en route d'un dispositif de dégivrage d'échangeurs de pompes de chaleur, pour connaître la température d'arrêt du chauffage etc.

La même sonde extérieure de mesure permet en fonctionnement alternatif, cyclique, à périodes suffisamment longues pour atteindre sûrement un régime stable, la mesure alternative et cyclique de la température extérieure et pendant les périodes de mise sous tension de la résistance 12, la mesure de la vitesse du vent. Disposant de ces deux valeurs de mesure, il est possible de commander la puissance de chauffage limitée disponible qui permet d'obtenir la température désirée dans les locaux à chauffer, mais qui ne peut être dépassée, même si le thermostat local le demandait au moment où un locataire ouvre les fenêtres par un jour ensoleillé d'hiver. On arrive ains à limiter au minimum le gaspillage des calories.

La détermination de cette puissance de chauffage limitée disponible peut se faire au moyen d'appareils de calcul par ordinateur ou par des calculateurs analogiques ou hybrides en fonction de la température extérieure et de la vitesse du vent. Le principe de ces calculs est donné ici sous forme d'un nomogramme, figure 5, établi en supposant que l'influence de la vitesse du vent est proportionnelle à cette vitesse par un faisceau de droites partant de la valeur de la température extérieure au dela de laquelle le chauffage est arrêté. Si l'influence de la vitesse du vent suit une autre loi que la loi de la proportionalité, le faisceau de droites devient un faisceau de lignes courbes. La figure 5 comprend deux exemples de lecture: la température extérieure vraie est lue sur l'abscisse; de là on monte jusqu'à la courbe donnant la vitesse mesurée du vent et on lit sur l'ordonnée la correction à soustraire de la lecture de la température extérieure vraie. La température extérieure corrigée ainsi obtenue sert de consigne de la puissance de chauffage limitée disponible.

| 1) T. ext: | +10°C |
| vent: | 8 m/sec |
| correction: | −1°C |
| (T ext corr: | 9°) |

| 2) T. ext: | −16°C |
| vent | 20 m/sec |
| correction | −9°C |
| (T ext corr.: | −25°C) |

Il est évident que l'algorithme de ce nomogramme peut être traduit en un languauge propre d'un microordinateur ou d'un dispositif de calcul quelconque, hybride ou analogique etc., incorporé dans le dispositif de commande de la puissance de chauffage limitée disponible.

La supposition que l'influence de la vitesse du vent est proportionnelle à cette vitesse est fort proche de la réalité pour une maison bien isolée et dont les fenêtres et portes ferment bien. En effet, les déperditions de chaleur à travers la partie bien isdée de la maison, c'est-à-dire les murs de la toit ne sont que très peu affectés par l'influnece de la vitesse du vent. Par contre, les déperditions à travers les fentes le long des bords de fenêtres et portes, moins importantes, ont presque pour unique cause la vitesse du vent. L'ensemble de ces conditions est imité ou simulé par la sonde suivant l'invention. En effet, les fines fentes représent les fentes le long des bords des fenêtres et portes, l'intérieur est un espace d'air chauffé par la résistance 12 (fig. 3) et la partie pleine du capot représente l'ensemble murs, toit et surface vitrée de la maison.

## Revendications

1. Sonde de mesure destinée à être disposée en plein air, comprenant une enceinte (8, 10) perméable à l'air et renfermant un élément (11) sensible à la température et une résistance chauffante (12), caractérisée en ce que la perméabilité à l'air de l'enceinte est réalisée soit par de fines fentes (13) d'une largeur inférieure à quelques dixièmes de millimètre et d'une longuer de quelques millimètres, réparties sur la surface de l'enceinte, soit par de la matière poreuse constituant au moins une partie de la paroi de l'enceinte.

2. Sonde suivant la revendication 1, caractérisée en ce que l'enceinte est formée par une base (8) et un capot (10) et en ce que le capot comprend plusieurs dizaines desdites fentes (13) d'une largeur de l'ordre d'un ou plusieurs dixièmes de millimètre et d'une longueur de quelques millimètres.

3. Installation de commande de chauffage comportant:

a) une sonde de mesure du type défini dans la revendication 1 ou 2 et disposée en plein air,

b) des moyens de mesure de la température de l'élement (11) sensible de ladite sonde,

c) des moyens pour alimenter la résistance chauffante (12) de ladite sonde en un courant de chauffage,

d) des moyens de contrôle commandant la puissance de chauffage en fonction des valeurs de température mesurées,

e) des moyens pour mettre cycliquement hors circuit la résistance chauffante, et

f) des moyens pour déterminer la vitesse du vent à partir de la différence entre la température extérieure fournie par les moyens de mesure lorsque la résistance chauffante est mise hors circuit et la température fournie par les moyens de mesure lorsque la résistance chauffante est mise en circuit,

les moyens de contrôle recevant comme valeurs de température ladite température extérieure et ladite différence

4. Installation suivant la revendication 3, caractérisée en ce qu'elle comprend un dispositif de calcul d'une consigne de puissance de chauffage limitée disponible en fonction de la mesure de la température extérieure et de la vitesse du vent.

## Patentansprüche

1. Meßsonde zur Abringung im Freien, aus einer luftdurchlässigen Umhüllung (8, 10), die ein temperatur-empfindliches Element (11) und einen Heizwiderstand (12) einschließt, dadurch gekennzeichnet, daß die Luftdurchlässigkeit der Umhüllung entweder durch feine Spalte (13) von einer Breite unter einigen zehntel Millimetern und einer Länge von einigen Millimetern, die über die Oberfläche der Umhüllung verteilt sind, oder durch poröses Material, das mindestens einen Teil der Wand der Umhüllung bildet, verwirklicht ist.

2. Meßsonde gemäß Anspruch 1, dadurch gekennzeichnet, daß die Umhüllung von einer Grundplatte (8) und einer Kappe (10) gebildet wird, und daß die Kappe mehrere Dutzend der besagten Spalte (13) von einer Breite von ungefähr einem bis zu mehreren zehntel Millimetern und einer Länge von einigen Millimetern aufweist.

3. Heizungssteuerungsanlage, aus:

a) einer im Freien angebrachten Meßsonde von der in Anspruch 1 oder 2 definierten Art,

b) Mitteln zur Messung der Temperatur des temperatur-empfindlichen Elementes (11) der besagten Sonde,

c) Mitteln, um einen Heizstrom durch den Heizwiderstand (12) der besagten Sonde fließen zu lassen,

d) Steuermitteln zur Steuerung der Heizleistung in Abhängigkeit von den gemessenen Temperaturwerten,

e) Mitteln zur zyklischen Außerbetriebsetzung des Heizwiderstandes, und

f) Mitteln zur Bestimmung der Windgeschwindigkeit aufgrund der Differenz zwischen der außentemperatur, die von den Meßmitteln geliefert wird, wenn der Heizwiderstand außer Betrieb gesetzt ist, und der Temperatur, die von den Meßmitteln geliefert wird, wenn der Heizwiderstand in Betrieb ist, wobei die Steuermittel als Temperaturwerte die besagte Außentemperatur und die besagte Differenz erhalten.

4. Anlage gemäß Anspruch 3, dadurch gekennzeichnet, daß sie eine Vorrichtung zur Berechnung eines Sollwertes für eine verfügbare begrenzte Heizleistung in Abhängigkeit von der gemessenen Außentemperatur und Windgeschwindigkeit aufweist.

Claims

1. Measuring sensor intended to be situated in the open air, comprising an air-permeable casing (8, 10) containing a temperature-sensitive element (11) and a heating resistor (12), characterised in that the permeability to air of the casing is achieved either by fine slits (13) of a width less than a few tenths of a millimetre and a length of several millimetres, distributed over the surface of the casing, or by porous material constituting at least part of the casing wall.

2. Sensor according to claim 1, characterised in that the casing is formed by a base (8) and a hood (10) and in that the hood comprises several dozen such slits (13) of a width of the order of one or more tenths of a millimetre and a length of several millimetres.

3. Heating control installation comprising:

a) a measuring sensor of the type defined in claim 1 or 2 and situated in the open air,

b) means for measuring the temperature of the sensitive element (11) of the said sensor,

c) means for supplying the heating resistor (12) of the said sensor with a heating current,

d) control means controlling the heating power in accordance with measured temperature values,

e) means for cyclically cutting the heating resistor out of circuit, and

f) means for determining the speed of the wind from the difference between the exterior temperature provided by the measuring means when the heating resistor is put out of circuit and the temperature provided by the measuring means when the heating resistor is connected into circuit, the control means receiving as temperature values the said exterior temperature and the said difference.

4. Installation according to claim 3, characterised in that it comprises a device for calculating an available limited heating power reference variable in accordance with the measurement of the exterior temperature and of the wind speed.

0 073 858

Fig.1

Fig.2

1

Fig.4

0 073 858

Fig.3

Fig.5

3